# EUROPÄISCHE PATENTSCHRIFT

(11) **EP 2 304 286 B1**
(45) Veröffentlichungstag und Bekanntmachung des Hinweises auf die Patenterteilung: **23.01.2013**
(21) Anmeldenummer: 09769153.9
(22) Anmeldetag: 16.06.2009
(51) Int. Cl.: F16K 15/00, F17D 1/14

(54) **VERFAHREN ZUM SICHEREN VERMEIDEN VON RÜCKSTRÖMUNG BEI DER FÖRDERUNG EINER FLÜSSIGKEIT**
METHOD FOR SAFELY PREVENTING BACKFLOWING IN THE CONVEYING OF A FLUID
PROCÉDÉ PERMETTANT D ÉVITER EN TOUTE FIABILITÉ UN REFOULEMENT LORS DU TRANSPORT D UN LIQUIDE

(30) Priorität: 25.06.2008 EP 08158969
(43) Veröffentlichungstag der Anmeldung: 06.04.2011
(73) Patentinhaber: BASF SE, 67056 Ludwigshafen (DE)
(72) Erfinder: BORGEL, Franz, 67246 Dirmstein (DE); KRAUSE, Alfred, 67346 Speyer (DE); KREITSCHMANN, Mirko, 68161 Mannheim (DE); MEIER, Anton, 67134 Birkenheide (DE); PAPE, Frank-Friedrich, 67259 Kleinniedesheim (DE); REIF, Wolfgang, 67227 Frankenthal (DE); SALLA, Michael, 67149 Meckenheim (DE)
(86) Internationale Anmeldenummer: PCT/EP2009/057462
(87) Internationale Veröffentlichungsnummer: WO 2009/156304

(56) Entgegenhaltungen:
- WO-A-2006/081745
- US-A- 3 361 146
- US-A- 3 746 027

## Beschreibung

Die Erfindung betrifft ein Verfahren zum sicheren Vermeiden von Rückströmung bei der Förderung einer Flüssigkeit unter Druck über eine Förderleitung in einen Behälter sowie eine Verwendung des Verfahrens zur Herstellung von Ethanolaminen, Isopropanolaminen, Alkylalkanolaminen, Alkyldialkanoldiaminen und/oder Dialkylalkanolaminen durch Umsetzung von Alkylenoxiden mit Aminen oder Ammoniak.

In der chemischen Verfahrenstechnik werden häufig Flüssigkeiten unter Druck in Behälter gefördert, die unter Druck stehen. Die Förderung kann aufgrund eines hydrostatischen Druckgefälles, insbesondere jedoch mittels einer Förderpumpe erfolgen. Bei einem Druckabfall, insbesondere einem Ausfall der Förderpumpe, kann Flüssigkeit entgegen der Förderrichtung aus dem Behälter zurück in die Förderleitung strömen. Dies kann in der Förderleitung zu Problemen führen.

Üblicherweise kann der durch Rückströmung übertragene Druck durch Sicherheitsventile abgeleitet werden. Dies ist für eine Vielzahl von Stoffen jedoch problematisch, da es durch die Freisetzung zu giftigen und/oder zündfähigen Gasmischungen kommen kann. Ferner verbietet sich dieser Ansatz bei Stoffen, die mit anderen Substanzen, die über Rückströmung in diese Rohrleitung gelangen können, unter hoher Exothermie reagieren oder in Anwesenheit von kleinen Mengen dieser Stoffe polymerisieren, zur Zersetzung neigen oder durch den Wärmeeintrag einer solchen Reaktion zersetzt oder polymerisiert werden.

In der Förderleitung werden daher Absperreinrichtungen vorgesehen, die bei einem Druckabfall schließen. Die Schließzeit von Absperreinrichtungen kann jedoch nicht beliebig verkürzt werden, so dass während der Reaktionszeit der Absperreinrichtung Flüssigkeit entgegen der Förderrichtung in der Förderleitung zurückströmen kann.

US-A-3361146 zeigt die Merkmale des Oberbegriffs des Anspruchs 1.

Es war daher Aufgabe der Erfindung, ein Verfahren zur Verfügung zu stellen, das eine Rückströmung von Flüssigkeit aus einem Behälter, in den Flüssigkeit unter Druck gefördert wird, und wobei in der Förderleitung eine Absperreinrichtung mit endlicher Schließzeit angeordnet ist, auch während der Schließzeit der Absperreinrichtung zuverlässig verhindert.

Es war darüber hinaus Aufgabe der Erfindung, ein Verfahren zum sicheren Vermeiden von Rückströmung in eine oder mehreren Zuführleitungen für ein oder mehrere Alkylenoxide in einem Verfahren zur Herstellung von Ethanolaminen, Isopropanolaminen, Alkylalkanolaminen, Alkyldialkanoldiaminen und/oder Dialkylalkanolaminen durch Umsetzung des einen oder der mehreren Alkylenoxide mit Alkylaminen oder Ammoniak, insbesondere aus dem Reaktor, in dem die Umsetzung durchgeführt wird, in die Zuführleitung für das eine oder die mehreren Alkylenoxide zur Verfügung zu stellen.

Die Rückströmung in die Zuführleitung für das eine oder die mehreren Alkylenoxide kann auch aus dem Dosiersystem für eine andere Komponente als das oder die Alkylenoxide in dem Reaktor erfolgen. Auch eine derartige Rückströmung soll erfindungsgemäß vermieden werden.

Die Aufgabe wird gelöst durch ein Verfahren zum sicheren Vermeiden von Rückströmung bei der Förderung einer Flüssigkeit unter Druck über eine Förderleitung, in der eine Absperreinrichtung mit Differenzdruckschaltung angeordnet ist, in einen Behälter, der unter Druck steht, und der die zu fördernde und/oder eine andere Flüssigkeit enthält wobei in der Förderleitung in Förderrichtung stromaufwärts der Absperreinrichtung ein Druckspeicher angeordnet ist, das dadurch gekennzeichnet ist, dass der Druchspeicher mit der zu fördernden Flüssigkeit bis auf ein bestimmtes Niveau und oberhalb des Flüssigkeitsspiegels, in direktem Kontakt mit der zu fördernden Flüssigkeit, mit einem Inertgas gefüllt ist, wobei das Inertgas im Druckspeicher gegenüber dem zu befüllenden Behälter unter einem Überdruck und/oder einer Menge vorgesehen ist, die so ausgelegt sind, dass bei einem Abfall des Druckes in der Förderleitung das Inertgas einen positiven Differenzdruck in der Förderleitung zu dem Behälter über einen Zeitraum gewährleistet, der mindestens so lange ist wie die Reaktionszeit der Absperreinrichtung und wobei die Absperreinrichtung eine Entleerleitung mit Entleerarmatur aufweist.

Das erfindungsgemäße Verfahren betrifft die Förderung einer Flüssigkeit unter Druck über eine Förderleitung in einen Behälter, der unter Druck steht und der die zu fördernde Flüssigkeit oder eine andere Flüssigkeit enthält. Die Förderung der Flüssigkeit kann durch hydrostatische Druckdifferenz erfolgen. Bevorzugt wird die Flüssigkeit mittels einer Pumpe gefördert.

Die Pumpe kann vorteilhaft eine volumetrisch fördernde Pumpe, insbesondere eine Kolbenpumpe, eine Membranpumpe oder eine Zahnradpumpe sein.

Membranpumpen sind insbesondere bei hohen Förderdrücken und für die Förderung von Flüssigkeiten mit korrosiven Eigenschaften vorteilhaft.

Eingesetzt werden kann auch eine Kreiselpumpe, die vorteilhaft Rückströmung reduzierende Einrichtungen aufweist, insbesondere eine oder mehrere Rückschlagklappen, bevorzugt auf der Druckseite der Kreiselpumpe.

In der Förderleitung ist eine Absperreinrichtung angeordnet, die eine Rückströmung der Flüssigkeit bei Druckabfall in der Förderleitung verhindert. Problematisch ist jedoch, dass Absperreinrichtungen stets eine gewisse Reaktionszeit aufweisen, die nicht unterschritten werden kann, und die nach dem derzeitigen Stand der Technik im Sekundenbereich, häufig im Bereich von etwa 2 s, liegt.

In der Absperreinrichtung ist eine Entleereinrichtung vorgesehen, das heißt eine Bleedleitung oder Entleerleitung mit Bleedarmatur oder Entleerarmatur.

In einer Ausführungsform ist die Entleerleitung mit Entleerarmatur eine Einfachentleerleitung mit Einfachentleerarmatur, wobei auf beiden Seiten der Einfachentleerleitung mit Einfachentleerarmatur eine Einfachblockschließarmatur vorgesehen ist.

Indem in der Absperreinrichtung auch eine Entleereinrichtung für die Flüssigkeit vorgesehen ist, wird zusätzlich zur Vermeidung von stofflichem Kontakt von rückgeströmter Flüssigkeit mit Flüssigkeit aus der Förderleitung auch ein indirekter thermischer Kontakt vermieden, indem zum Beispiel vermieden wird, dass heiße Flüssigkeit aus dem Behälter, in den die Flüssigkeit gefördert wird, mit kalter Flüssigkeit, die über die Förderleitung in den Behälter gefördert wird, durch Wärmeleitung in direkten thermischen Kontakt tritt.

Als Reaktionszeit der Absperreinrichtung wird der Zeitraum vom Detektieren des Auslösesignals zum Absperren bis zum vollständigen Schließen der Armatur verstanden.

Aus sicherheitstechnischen Gründen wird häufig eine Doppelentleerleitung mit Doppelentleerarmatur vorgesehen.

Es ist vorteilhaft, die Absperreinrichtung so auszubilden, dass zu beiden Seiten, das heißt stromabwärts und stromaufwärts der Doppelentleerleitung mit Doppelentleerarmatur jeweils eine Doppelblockschließarmatur vorgesehen ist.

Die Absperreinrichtung wird bevorzugt über eine Differenzdruckschaltung gesteuert. Für diesen Zweck sind aber auch andere eine Rückströmung registrierende Einrichtungen geeignet, zum Beispiel eine Massendurchflussmessung.

Erfindungsgemäß ist in der Förderleitung vor dem zu befüllenden Behälter, bei Förderung der Flüssigkeit mittels einer Pumpe zwischen Pumpe und zu befüllenden Behälter, ein Druckspeicher angeordnet. Der Druckspeicher ist mit der zu fördernden Flüssigkeit teilweise befüllt. Über dem Flüssigkeitsspiegel im Druckbehälter wird über eine Zuführleitung ein Inertgas eingebracht. Derartige Einrichtungen sind im Stand der Technik zum Dämpfen von Pulsationen bekannt. Erfindungsgemäß wird jedoch ein Druckspeicher eingesetzt, der dergestalt dimensioniert ist, dass er bei einem Druckabfall in der Förderleitung einen positiven Differenzdruck in Förderrichtung aufrechterhält. Der Druckspeicher wirkt somit als Druckpuffer oder vorgespannte Druckfeder.

Der Druckspeicher umfasst vorzugsweise ein vertikal angeordnetes Rohr, das bei einem möglichst niedrigen Flüssigkeits-Holdup eine gute Standregelung gewährleistet, das heißt, das so ausgelegt ist, dass kleinste Schwankungen an Flüssigkeitsvolumen maximale Flüssigkeitsstandunterschiede bewirken. Das Rohr ist, bevorzugt an dessen unterem Ende, mit der Förderleitung für die Flüssigkeit verbunden.

Vorteilhaft dient die Verbindung am unteren Ende des Rohrs mit der Förderleitung jedoch nur der Ableitung von Flüssigkeit, die Zuführung erfolgt bevorzugt oberhalb des unteren Endes des Rohres. Dadurch werden eine gute Durchströmung des Rohres mit der Flüssigkeit und möglichst niedrige Verweilzeiten der Flüssigkeit im Rohr erreicht. Dies ist vor allem bei zur Polymerisation neigenden Flüssigkeiten vorteilhaft.

Das Rohr ist mit einer Standmessung für die Flüssigkeit ausgestattet.

Am oberen Ende geht das Rohr in einen Behälter über, der zur Aufnahme der Flüssigkeit bis auf ein bestimmtes Niveau dient. Oberhalb des Flüssigkeitsspiegels wird über eine Zuführöffnung ein Inertgas, häufig Stickstoff, in den Druckspeicher eingebracht.

Der Behälter am oberen Ende des Rohres ist bevorzugt abgerundet und symmetrisch ausgebildet.

Das Rohr des Druckspeichers hat häufig eine Länge im Bereich von 1 bis 5 m, bevorzugt von 4 bis 5 m und einen Durchmesser im Bereich von 100 bis 300 mm, bevorzugt in einem Bereich zwischen 90 und 150 mm.

Die Dimensionierung des druckfesten Behälters am oberen Ende des Druckspeichers erfolgt vorteilhaft unter Berücksichtigung der folgenden Randbedingungen:
- minimaler Druck im zu befüllenden Behälter,
- maximaler Druck im Druckspeicher,
- Schaltpunkt und Reaktionszeit der Differenzdruckschaltung der Absperreinrichtung,
- Schließzeit der Absperreinrichtung und
- Vordruck der zu fördernden Flüssigkeit vor der Förderleitung.

In einer bevorzugten Ausführungsform ist die zu fördernde Flüssigkeit ein Alkylenoxid oder eine Mischung von Alkylenoxiden der Formel 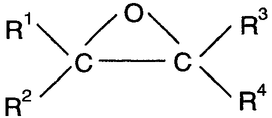 worin
R¹ bis R⁴ jeweils unabhängig voneinander Wasserstoff, ein C₁-C₄-Alkyl-, ein C₅- oder C₆-Cycloalkyl- oder ein Phenylrest sind,
oder R¹ und R³ und/oder R² und R⁴ jeweils miteinander zu einem Cycloalkylrest verbunden sind, wobei R¹ und R³ und/oder R² und R⁴ in der Summe bevorzugt 3 oder 4 C-Atome aufweisen und wobei die gegebenenfalls nicht miteinander verbundenen Reste jeweils Wasserstoff oder ein C₁- bis C₄Alkylrest sind,
oder R¹ und R² und/oder R³ und R⁴ jeweils miteinander zu einem Cycloalkylrest verbunden sind, wobei R¹ und R² und/oder R³ und R⁴ in der Summe jeweils 2, 3, 4 oder 5 C-Atome aufweisen und
der zu befüllende Behälter ein Reaktor, in dem das Alkylenoxid oder die Mischung von Alkylenoxiden mit Alkylaminen oder Ammoniak umgesetzt wird.

Bevorzugt ist das Alkylenoxid Ethylenoxid und/oder Propylenoxid.

Weiter bevorzugte Alkylenoxide sind Isobutylenoxid, Cyclohexenoxid oder Styroloxid.

Hierbei wird vorteilhaft das in der Regel vorgewärmte Alkylamin über ein Mischventil, das Teil der Absperreinrichtung ist, mit dem Alkylenoxid vermischt und dem Reaktor zugeführt, worin die Umsetzung bei erhöhtem Druck und erhöhter Temperatur erfolgt. In der Alkylenoxid enthaltenden Leitung werden Drücke und Temperaturen so eingestellt, dass ein Sieden des Alkylenoxids vermieden wird. Prinzipiell kann in der Leitung jeder für das jeweilige Verfahren erforderliche Betriebsdruck eingestellt werden. Häufig werden Drücke von 5 bis 30 oder 70 bis 150 bar verwendet.

Als Inertgas wird vorteilhaft Stickstoff, ein Edelgas, Methan oder CO₂ eingesetzt.

Ein weiterer Gegenstand der Erfindung war die Bereitstellung einer Verwendung des oben beschriebenen Verfahrens zum sicheren Vermeiden von Rückströmung der Reaktionsmischung aus einem Reaktor zur Herstellung von Ethanolaminen, Isopropanolaminen, Alkylalkanolaminen, Alkyldialkanoldiaminen und/oder Dialkylalkanolaminen durch Umsetzung von Alkylenoxiden mit Aminen oder Ammoniak.

Die Erfindung wird im Folgenden anhand von Ausführungsbeispielen sowie einer Zeichnung näher erläutert.

### Ausführungsbeispiele

In einem lang gestreckten Rohrreaktor einer kontinuierlich betriebenen Druckanlage wird eine Amin/Wasser-Mischung mit Ethylenoxid. im Folgenden abgekürzt als EO bezeichnet, zu Alkylethanolamin umgesetzt. Die Ethylenoxiddosierung erfolgt zu einem Alkylamin/Wasser-Gemisch bei einer Temperatur von ca. 90 - 110°C und einem Druck von ca. 25 bis 30 bar absolut. Der Druck am Ende des Rohrreaktors wird bei bestimmungsgemäßem Betrieb über ein Regelventil auf 26 bar absolut gehalten. Das EO wird über eine Membrankolbenpumpe von ca. 18 bar absolut (saugseitig) auf ca. 39 bar absolut (druckseitig) verdichtet und danach über ein Druckhalteventil (Drehkegelventil, Δb = 8 bis 10 bar) in den Rohrreaktor dosiert. Vor dem Druckhalteventil befindet sich eine Schnellschlussarmatur (Kugelhahn, Z-Qualität), die der Verhinderung von Rückströmung dient. Zwischen der Membrankolbenpumpe und der Regelstrecke ist ein Druckspeicher installiert, der zum einen Druckpulsationen auf der Druckseite der Pumpe minimieren und zum anderen einen positiven Differenzdruck ausreichend lange aufrechterhalten soll. Die Gasphase des Druckspeichers wird mit Stickstoff (pₘₐₓ = 41 bar absolut) beaufschlagt. Der erforderliche Füllstand an EO bzw. die erforderliche Stickstoffmenge im Pulsationsdämpfer wird über eine Füllstandsregelung gewährleistet.

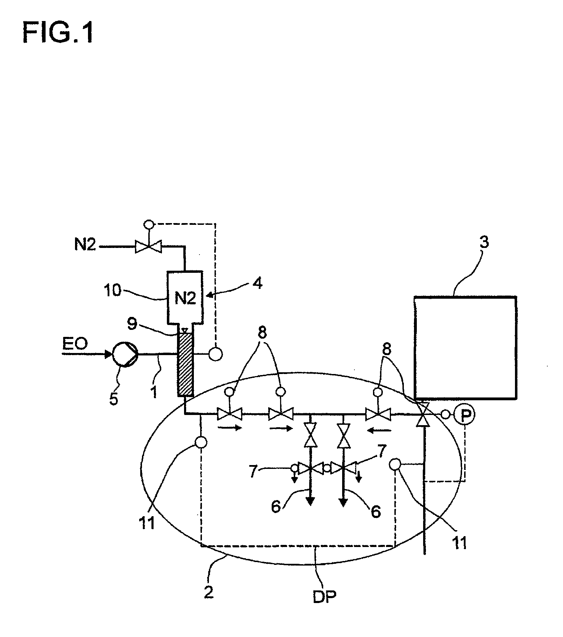

Die Anlage ist schematisch in Figur 1 dargestellt.

Es ist folgendes Szenario abzusichern:

Es wird unterstellt, dass die Membrankolbenpumpe in der EO-Leitung ausfällt. In Folge dessen kommt es zu einem Druckabfall in der EO-Leitung, wobei als "worst case" angenommen wird, dass der Druck bis auf den Absicherungsdruck im EO-Netz absinkt. Es wird ferner angenommen, dass die Membrankolbenpumpe sofort zum Stehen kommt und nicht vollständig dicht ist.

Da der Reaktordruck höher ist als der Absicherungsdruck im EO-Netz, muss es zwangsläufig zu einer Rückströmung aus dem Reaktor in die EO-Leitung kommen. Die Zeitdauer bis zum Einsetzen der Rückströmung wird im Wesentlichen von der Dauer des Ausspeicherns aus dem Druckspeicher bestimmt, da das dort vorgespannt vorliegende und sich dann entspannende Intergasvolumen neben der Trägheit der EO-Masse in der Rohrleitung den einzigen der Rückströmung entgegenwirkenden Faktor darstellt. Innerhalb dieser Zeitspanne muss die Absperreinrichtung vollständig und dicht geschlossen haben, weil nur so sichergestellt ist, dass kein Produkt in die EO-Leitung gelangen kann.

Hierzu wird der druckfeste Behälter des Druckspeichers unter Berücksichtigung der folgenden Randbedingungen dimensioniert:
- minimaler Druck im Reaktor 20 bar absolut,
- maximaler Druck im druckfesten Behälter des Druckspeichers 41 bar absolut,
- Schaltpunkt der Differenzdruckschaltung der Absperreinrichtung 3,5 bar absolut,
- Reaktionszeit der Absperreinrichtung 3,5 s,
- Schließzeit der Armaturen der Absperreinrichtung 2 s und
- Vordruck im Ethylenoxidnetz 13 bar absolut.

Die Dimensionierung des Druckspeichers wird rechnerisch mit dem handelsüblichen Programmsystem SIR-3S® (Release 6.3) vorgenommen, das zur Simulation einphasiger instationärer Strömungsvorgänge in Rohrleitungssystemen dient.

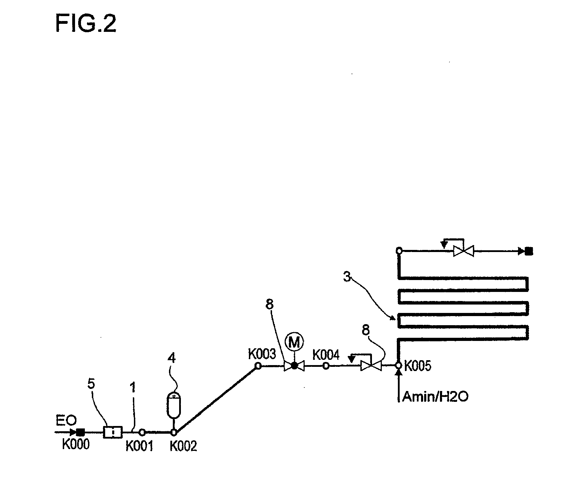

Die in Figur 1 dargestellte Anlage wurde in ein fluiddynamisches Simulationsmodell umgesetzt, das in Figur 2 dargestellt ist und worin Berechnungsknoten K001 bis K005 festgelegt sind.

Für die Berechnung wurde das Schaltsignal für die Absperreinrichtung auf eine Druckdifferenz von 3,5 bar festgelegt. Es wurde eine Reaktionszeit der Absperreinrichtung von 3,5 s und eine Schließzeit der Armaturen der Absperreinrichtung von 2 s berücksichtigt.

Aus den Ergebnissen der Simulationsberechnung geht hervor, dass ein Druckspeicher mit einem Gesamtvolumen von 21 l, wovon 4 l mit Ethylenoxid gefüllt sind, das heißt 17 l mit Stickstoff gefüllt, die gewünschte Funktion erfüllt.

Die Simulationsergebnisse für einen solchen Druckspeicher sind in den Figuren 3 bis 5 dargestellt und werden im Folgenden in der Figurenbeschreibung erläutert.

In der Zeichnung zeigen im Einzelnen:
- Figur 1: die schematische Darstellung einer bevorzugten Anlage zur Durchführung des erfindungsgemäßen Verfahrens,
- Figur 2: ein fluiddynamisches Simulationsmodell für die in Figur 1 dargestellte Anlage,
- Figuren 3 bis 5: Simulationsergebnisse für das in Figur 2 dargestellte fluiddynamische Modell und
- Figur 6: eine bevorzugte Ausführungsform für einen Druckspeicher.

Die in Figur 1 schematisch dargestellte bevorzugte Ausführungsform zeigt eine Anlage zur Förderung von Ethylenoxid über eine Förderleitung 1 mittels einer Pumpe 5, wobei in der Förderleitung 1 eine Absperreinrichtung 2 angeordnet ist, umfassend eine Doppelbleedleitung 6 mit Doppelbleedarmaturen 7 sowie beidseitig hiervon angeordnete Doppelblockarmaturen 8. Die Absperreinrichtung 2 umfasst ferner Druckaufnehmer 11 und ein Differenzdruckmessgerät DP.

Die Flüssigkeit wird in einen Behälter 3 gefördert, der unter Druck steht und mit Flüssigkeit gefüllt ist. In der Förderleitung 1 ist ein Druckspeicher 4 angeordnet, umfassend ein Rohr 9, dass von der zu fördernden Flüssigkeit durchströmt ist und mit dieser bis auf ein bestimmtes Niveau gefüllt ist, und wobei sich über dem Flüssigkeitsspiegel in einem druckfesten Behälter 10 am oberen Ende des Rohres 9 ein Stickstoff-Druckpuffer befindet.

Figur 2 zeigt die Umsetzung der in Figur 1 schematisch dargestellten Anlage in ein fluiddynamisches Simulationsmodell, wobei die Positionen für die Berechnungsknoten K000 bis K005 angegeben sind.

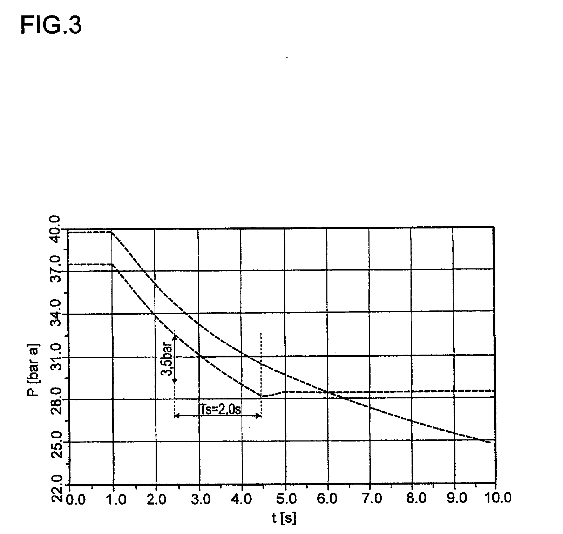

Die Figuren 3 bis 5 zeigen die Simulationsergebnisse für den Druckspeicher.

In Figur 3 sind die Druckverläufe über der Zeit für die Berechnungsknoten K001 bis K005 gemäß dem Simulationsmodell in Figur 2 aufgetragen. Der Berechnungsknoten K001 gibt den Druck auf der Druckseite der Pumpe 5 wieder, der Berechnungsknoten K002 bezeichnet den Anschlusspunkt des Druckspeichers 4 an die EO-Förderleitung 1. Beide Berechnungsknoten befinden sich auf einem fiktiven 0 m-Niveau. Auf der Abzisse ist die Schaltzeit t[s] aufgetragen, entsprechend auch in den folgenden Figuren.

Die Berechnungsknoten K003, K004 und K005 befinden sich auf 25 m-Niveau und bezeichnen die Punkte vor der Schnellschlussarmatur (K003), vor der Druckhaltearmatur (K004) der Absperreinrichtung 2, und am Einspeisepunkt in den Reaktor 3 (K005). Nach Ausfall der Förderpumpe 5 zum Simulationszeitpunkt t = 1 s sinkt der Druck an allen fünf Berechnungsknoten ab. Allerdings fällt er in der EO-Förderleitung 1 (K001 - K004) erwartungsgemäß schneller ab als im Reaktor 3 (K005), da im Reaktor 3 der Volumenstrom an Amin/Wasser weiter erhalten bleibt und nur der EO-Strom sich verringert. Die stationär vorhandene Druckdifferenz von 8 bar über der Absperreinrichtung 2 in der EO-Förderleitung 1 zwischen den Punkten K003 und K005 verringert sich mit zunehmender Zeitdauer bis sie zum Simulationszeitpunkt 2,4 s den Wert 3,5 bar erreicht. Damit ist der Schaltpunkt für die Absperreinrichtung 2 erreicht und der Schließvorgang beginnt. In dieser Simulation wird der Schließvorgang 100 ms später gestartet (als Tribut an eine mögliche Signalverzögerungszeit), also zum Zeitpunkt t = 2,5 s. Der Schließvorgang endet 2 s später, zum Simulationszeitpunkt 4,5 s. Eine Rückströmung, die sich in einer negativen Druckdifferenz zwischen den Berechnungsknoten K004 und K005 bemerkbar machen würde, tritt bis zum Zeitpunkt 4,5 s nicht auf.

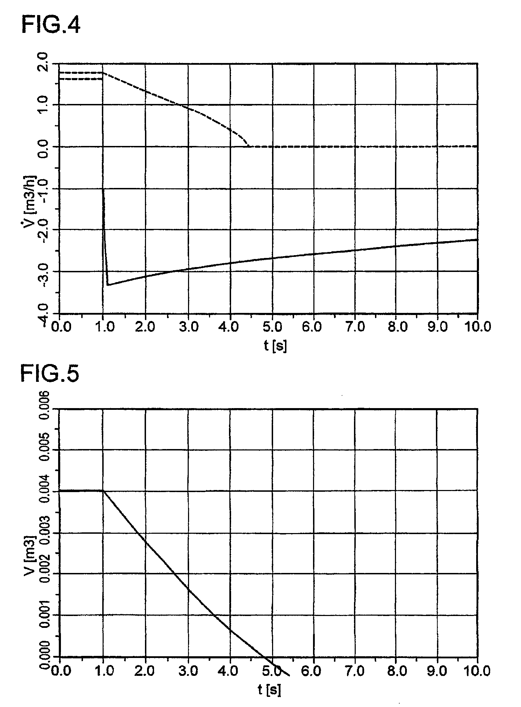

Dass keine Rückströmung zu verzeichnen ist, bestätigen auch die Volumenstromverläufe in Figur 4. Der Volumenstrom durch das Regelventil (K004 - K005) ist stets positiv. Das Diagramm zeigt auch deutlich, dass der "Leckvolumenstrom" durch die Pumpe 5 ("5 mm-Loch") größer ist als der Volumenstrom in Richtung Reaktor 3. Der größere Teil des vom Druckspeicher 4 eingespeisten EO-Volumens geht also "verloren", das heißt steht zur Aufrechterhaltung eines positiven Volumenstromes in Richtung Reaktor 3 gar nicht zur Verfügung. Aus diesem Grund muss das Volumen des Druckspeichers 4 größer gewählt werden als es notwendig wäre, wenn der Leckstrom durch die Pumpe nicht berücksichtigt werden müsste.

Figur 5 zeigt das EO-Volumen im Druckspeicher 4. Zum Zeitpunkt 4,5 s, wenn die Absperreinrichtung 2 vollständig geschlossen ist, befindet sich noch ein geringes Volumen an EO (ca. 0,2 l) im Druckspeicher 4. Im vorliegenden Beispiel ist auch sichergestellt, dass die Förderleitung 1 bis zum vollständigen Schließen der Absperreinrichtung 2 mit EO gefüllt ist.

Aus den Ergebnissen lässt sich also ableiten, dass ein Druckspeicher mit einem Gesamtinhalt von 21 l, davon 4 l mit EO gefüllt, ausreichend dimensioniert ist, um unter den geschilderten Voraussetzungen und Randbedingungen sicherzustellen, dass eine positive Druckdifferenz solange aufrechterhalten bleibt bis die Absperreinrichtung vollständig geschlossen ist.

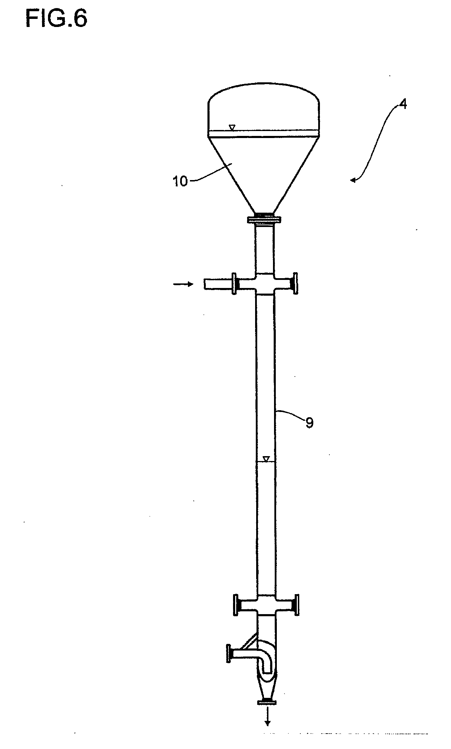

Figur 6 zeigt eine bevorzugte Ausführungsform für einen Druckspeicher, mit vertikal angeordnetem Rohr 9, das an seinem oberen Ende in einen Behälter 10 übergeht, mit konischem Übergangsteil, der in einen zylindrischen Teil übergeht. Vorteilhaft wird, wie in der Figur dargestellt, die zu fördernde Flüssigkeit im oberen Bereich des vertikal angeordneten Rohres zugeführt und am unteren Ende desselben weitergeleitet, wodurch eine Durchmischung der Flüssigkeit im Druckspeicher bewirkt wird.

## Patentansprüche

1. Verfahren zum sicheren Vermeiden von Rückströmung bei der Förderung einer Flüssigkeit unter Druck über eine Förderleitung (1), in der eine Absperreinrichtung (2) mit Differenzdruckschaltung angeordnet ist, in einen Behälter (3), der unter Druck steht, und der die zu fördernde und/oder eine andere Flüssigkeit enthält wobei in der Förderleitung (1) in Förderrichtung stromaufwärts der Absperreinrichtung (2) ein Druckspeicher (4) angeordnet ist, **dadurch gekennzeichnet, dass** der Druckspeicher (4) mit der zu fördernden Flüssigkeit bis auf ein bestimmtes Niveau und oberhalb des Flüssigkeitsspiegels, in direktem Kontakt mit der zu fördernden Flüssigkeit, mit einem Inertgas gefüllt ist, wobei das Inertgas im Druckspeicher (4) gegenüber dem zu befüllenden Behälter (3) unter einem Überdruck und einer Menge vorgesehen ist, die so ausgelegt sind, dass bei einem Abfall des Druckes in der Förderleitung (1) das Inertgas einen positiven Differenzdruck in der Förderleitung (1) zu dem Behälter (3) über einen Zeitraum gewährleistet, der mindestens so lange ist wie die Reaktionszeit der Absperreinrichtung (2), und dass die Absperreinrichtung (2) eine Entleerleitung (6) mit Entleerarmatur (7) aufweist.

2. Verfahren nach Anspruch 1, **dadurch gekennzeichnet, dass** die Flüssigkeit in der Förderleitung mittels einer Pumpe (5) gefördert wird.

3. Verfahren nach Anspruch 2, **dadurch gekennzeichnet, dass** die Pumpe (5) eine volumetrisch fördernde Pumpe, insbesondere eine Kolbenpumpe, eine Membranpumpe oder eine Zahnradpumpe ist.

4. Verfahren nach Anspruch 2, **dadurch gekennzeichnet, dass** die Pumpe (5) eine Kreiselpumpe ist.

5. Verfahren nach Anspruch 4, **dadurch gekennzeichnet, dass** die Kreiselpumpe Rückströmung reduzierende Einrichtungen aufweist, insbesondere eine oder mehrere Rückschlagklappen, die bevorzugt auf der Druckseite der Kreiselpumpe angeordnet sind.

6. Verfahren nach einem der Ansprüche 1 bis 5, **dadurch gekennzeichnet, dass** die Entleerleitung (6) mit Entleerarmatur (7) eine Einfachentleerleitung mit Einfachentleerarmatur ist, und dass jeweils eine Einfachblockschließarmatur auf beiden Seiten der Einfachentleerleitung (6) mit Einfachentleerarmatur (7) vorgesehen ist.

7. Verfahren nach einem der Ansprüche 1 bis 5, **dadurch gekennzeichnet, dass** die Entleerleitung (6) mit Entleerarmatur (7) eine Doppelentleerleitung mit Doppelentleerarmatur ist, und dass jeweils eine Doppelblockschließarmatur (8) auf beiden Seiten der Doppelentleerleitung mit Doppelentleerarmatur vorgesehen ist.

8. Verfahren nach einem der Ansprüche 1 bis 7, **dadurch gekennzeichnet, dass** der Druckspeicher (4) ein vertikal angeordnetes Rohr (9) mit einer Einrichtung zur Flüssigkeitsstandmessung aufweist, das an seinem oberen Ende in einen Behälter (10) übergeht.

9. Verfahren nach Anspruch 8, **dadurch gekennzeichnet, dass** das vertikal angeordnete Rohr (9) eine Länge im Bereich von 1 bis 5 m, bevorzugt im Bereich von 4 bis 5 m, und einen Durchmesser im Bereich von 100 bis 300 mm, bevorzugt in einem Bereich von 90 bis 150 mm, aufweist.

10. Verfahren nach einem der Ansprüche 1 bis 9, **dadurch gekennzeichnet, dass** die Dimensionierung des Behälters (10) im oberen Ende des Druckspeichers (4) unter Berücksichtigung der folgenden Randbedingungen erfolgt:
- minimaler Druck im Behälter (3),
- maximaler Druck im Behälter (10) am oberen Ende des Druck-speichers (4),
- Schaltpunkt und Reaktionszeit der Absperreinrichtung (2),
- Schließzeit der Absperreinrichtung (2) und
- Vordruck der zu fördernden Flüssigkeit vor der Förderleitung (1).

11. Verfahren nach einem der Ansprüche 1 bis 10, **dadurch gekennzeichnet, dass** die zu fördernde Flüssigkeit in das vertikal angeordnete Rohr (9) in dessen oberem Bereich zugeführt und an dessen unterem Ende weitergeleitet wird.

12. Verfahren nach einem der Ansprüche 1 bis 11, **dadurch gekennzeichnet, dass** die geförderte Flüssigkeit ein Alkylenoxid oder eine Mischung von Alkylenoxiden der Formel 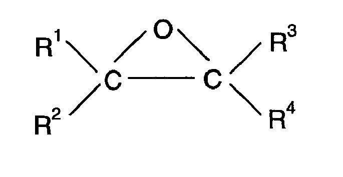 ist, worin
R¹ bis R⁴ jeweils unabhängig voneinander Wasserstoff, ein C₁-C₄-Alkyl-, ein C₅-oder C₆-Cycloalkyl- oder ein Phenylrest sind
oder R¹ und R³ und/oder R² und R⁴ jeweils miteinander zu einem Cycloalkylrest verbunden sind, wobei R¹ und R³ und/oder R² und R⁴ in der Summe bevorzugt 3 oder 4 C-Atome aufweisen und wobei die gegebenenfalls nicht miteinander verbundenen Reste jeweils Wasserstoff oder ein C₁- bis C₄Alkylrest sind,
oder R¹ und R² und/oder R³ und R⁴ jeweils miteinander zu einem Cycloalkylrest verbunden sind, wobei R¹ und R² und/oder R³ und R⁴ in der Summe jeweils 2, 3, 4 oder 5 C-Atome aufweisen.

13. Verfahren nach Anspruch 12, **dadurch gekennzeichnet, dass** Alkylenoxid Ethylenoxid und/oder Propylenoxid ist.

14. Verfahren nach Anspruch 12, **dadurch gekennzeichnet, dass** das Alkylenoxid Isobutylenoxid, Cyclohexenoxid oder Styroloxid ist.

15. Verfahren nach einem der Ansprüche 1 bis 14, **dadurch gekennzeichnet, dass** das Inertgas Stickstoff, ein Edelgas, Methan oder CO₂ ist.

16. Verwendung des Verfahrens nach einem der Ansprüche 1 bis 15 zum sicheren Vermeiden von Rückströmung der Reaktionsmischung aus einem Reaktor zur Herstellung von Ethanolaminen, Isopropanolaminen, Alkylalkanolaminen, Alkyldialkanoldiaminen und/oder Dialkylalkanolaminen durch Umsetzung von Alkylenoxiden mit Aminen oder Ammoniak.

## Claims

1. A method for reliably avoiding backflow in the transport of a liquid under pressure via a transport pipe (1), in which a shut-off device (2) with differential pressure switching is arranged, into a container (3) which is under pressure and which comprises the liquid to be transported and/or another liquid, a pressure accumulator (4) being arranged in the transport pipe (1) upstream from the shut-off device (2) in the transport direction, wherein the pressure accumulator (4) is filled with the liquid to be transported up to a certain level and above the liquid level, in direct contact with the liquid to be transported, with an inert gas, the inert gas being provided in the pressure accumulator (4) under an excess pressure and in an amount relative to the container (3) to be filled which are designed so that, in the case of a drop in the pressure in the transport pipe (1), the inert gas ensures a positive pressure difference in the transport pipe (1) to the container (3) over a period which is at least as long as the reaction time of the shut-off device (2), and the shut-off device (2) has an emptying pipe (6) with emptying valve (7).

2. The method according to claim 1, wherein the liquid is transported in the transport pipe by means of a pump (5).

3. The method according to claim 2, wherein the pump (5) is a volumetric pump, in particular a piston pump, a diaphragm pump or a gear pump.

4. The method according to claim 2, wherein the pump (5) is a centrifugal pump.

5. The method according to claim 4, wherein the centrifugal pump has backflow-reducing devices, in particular one or more nonreturn valves, which are preferably arranged on the pressure side of the centrifugal pump.

6. The method according to any of claims 1 to 5, wherein the emptying pipe (6) with emptying valve (7) is a single emptying pipe with single emptying valve, and wherein in each case a single block closing valve (8) is provided on both sides of the single emptying pipe with single emptying valve.

7. The method according to any of claims 1 to 5, wherein the emptying pipe (6) with emptying valve (7) is a double emptying pipe with double emptying valve, and wherein in each case a double block closing valve (8) is provided on both sides of the double emptying pipe with double emptying valve.

8. The method according to any of claims 1 to 7, wherein the pressure accumulator (4) has a vertically arranged pipe (9) with a device for liquid level measurement which connects at its upper end to a container (10).

9. The method according to claim 8, wherein the vertically arranged pipe (9) has a length in the range from 1 to 5 m, preferably in the range from 4 to 5 m, and a diameter in the range from 100 to 300 mm, preferably in a range from 90 to 150 mm.

10. The method according to any of claims 1 to 9, wherein the dimensioning of the container (10) at the upper end of the pressure accumulator (4) is effected taking into account the following boundary conditions:
- minimum pressure in the container (3),
- maximum pressure in the container (10) at the upper end of the pressure accumulator (4),
- switching point and reaction time of the shut-off device (2)
- closing time of the shut-off device (2) and
- admission pressure of the liquid to be transported before the transport pipe (1).

11. The method according to any of claims 1 to 10, wherein the liquid to be transported is fed into the upper region of the vertically arranged pipe (9) and is passed on at the lower end thereof.

12. The method according to any of claims 1 to 11, wherein the liquid transported is an alkylene oxide or a mixture of alkylene oxides of the formula 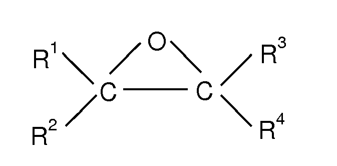 where
R¹ to R⁴, in each case independently of one another, are hydrogen or a C₁-C₄-alkyl, a C₅- or C₆-cycloalkyl or a phenyl radical
or R¹ and R³ and/or R² and R⁴ in each case are linked to one another to form a cycloalkyl radical, R¹ and R³ and/or R² and R⁴ having in total preferably 3 or 4 carbon atoms and the radicals not linked to one another if appropriate being in each case hydrogen or a C₁- to C₄-alkyl radical
or R¹ and R² and/or R³ and R⁴ are in each case linked to one another to form a cycloalkyl radical, R¹ and R² and/or R³ and R⁴ having in total in each case 2, 3, 4 or 5 carbon atoms.

13. The method according to claim 12, wherein the alkylene oxide is ethylene oxide and/or propylene oxide.

14. The method according to claim 12, wherein the alkylene oxide is isobutylene oxide, cyclohexene oxide or styrene oxide.

15. The method according to any of claims 1 to 14, wherein the inert gas is nitrogen, a noble gas, methane or CO₂.

16. The use of the method according to any of claims 1 to 15 for reliably avoiding backflow of the reaction mixture from a reactor for the preparation of ethanolamines, isopropanolamines, alkylalkanolamines, alkyldialkanoldiamines and/or dialkylalkanolamines by reaction of alkylene oxides with amines or ammonia.

## Revendications

1. Procédé permettant d'éviter en toute fiabilité un refoulement lors du transport d'un liquide sous pression par une conduite de transport (1), dans laquelle un dispositif d'arrêt (2) comprenant un circuit à pression différentielle est agencé, dans un contenant (3) qui se trouve sous pression et qui contient le liquide à transporter et/ou un autre liquide, un accumulateur de pression (4) étant agencé en amont du dispositif d'arrêt (2) dans la direction de transport dans la conduite de transport (1), **caractérisé en ce que** l'accumulateur de pression (4) est rempli avec le liquide à transporter jusqu'à un niveau déterminé et avec un gaz inerte au-dessus du niveau du liquide, en contact direct avec le liquide à transporter, le gaz inerte dans l'accumulateur de pression (4) étant prévu en une surpression par rapport au contenant à remplir (3) et en une quantité qui sont choisies de manière à ce que lors d'une chute de la pression dans la conduite de transport (1), le gaz inerte assure une pression différentielle positive dans la conduite de transport (1) par rapport au contenant (3) pendant une durée au moins aussi longue que le temps de réaction du dispositif d'arrêt (2), et **en ce que** le dispositif d'arrêt (2) comprend une conduite d'évacuation (6) munie d'un robinet d'évacuation (7).

2. Procédé selon la revendication 1, **caractérisé en ce que** le liquide est transporté dans la conduite de transport par une pompe (5).

3. Procédé selon la revendication 2, **caractérisé en ce que** la pompe (5) est une pompe volumétrique, notamment une pompe à piston, une pompe à membrane ou une pompe à engrenages.

4. Procédé selon la revendication 2, **caractérisé en ce que** la pompe (5) est une pompe centrifuge.

5. Procédé selon la revendication 4, **caractérisé en ce que** la pompe centrifuge comprend des dispositifs réduisant le refoulement, notamment un ou plusieurs clapets anti-retour, qui sont de préférence agencés du côté pression de la pompe centrifuge.

6. Procédé selon l'une quelconque des revendications 1 à 5, **caractérisé en ce que** la conduite d'évacuation (6) munie d'un robinet d'évacuation (7) est une conduite d'évacuation simple munie d'un robinet d'évacuation simple et **en ce qu'**un robinet de fermeture de blocage simple est prévu sur chacun des deux côtés de la conduite d'évacuation simple (6) munie d'un robinet d'évacuation simple (7).

7. Procédé selon l'une quelconque des revendications 1 à 5, **caractérisé en ce que** la conduite d'évacuation (6) munie d'un robinet d'évacuation (7) est une conduite d'évacuation double munie d'un robinet d'évacuation double et **en ce qu'**un robinet de fermeture de blocage double (8) est prévu sur chacun des deux côtés de la conduite d'évacuation double munie d'un robinet d'évacuation double.

8. Procédé selon l'une quelconque des revendications 1 à 7, **caractérisé en ce que** l'accumulateur de pression (4) comprend un tube agencé verticalement (9) muni d'un dispositif pour la mesure du niveau de liquide, qui se transforme en un contenant (10) à son extrémité supérieure.

9. Procédé selon la revendication 8, **caractérisé en ce que** le tube agencé verticalement (9) présente une longueur dans la plage allant de 1 à 5 m, de préférence dans la plage allant de 4 à 5 m, et un diamètre dans la plage allant de 100 à 300 mm, de préférence dans une plage allant de 90 à 150 mm.

10. Procédé selon l'une quelconque des revendications 1 à 9, **caractérisé en ce que** le dimensionnement du contenant (10) à l'extrémité supérieure de l'accumulateur de pression (4) a lieu en prenant en compte les conditions aux limites suivantes :
- la pression minimale dans le contenant (3),
- la pression maximale dans le contenant (10) à l'extrémité supérieure de l'accumulateur de pression (4),
- le point de commutation et le temps de réaction du dispositif d'arrêt (2),
- le temps de fermeture du dispositif d'arrêt (2) et
- la pression du liquide à transporter avant la conduite de transport (1).

11. Procédé selon l'une quelconque des revendications 1 à 10, **caractérisé en ce que** le liquide à transporter est introduit dans la zone supérieure du tube agencé verticalement (9) et transféré vers son extrémité inférieure.

12. Procédé selon l'une quelconque des revendications 1 à 11, **caractérisé en ce que** le liquide transporté est un oxyde d'alkylène ou un mélange d'oxydes d'alkylène de formule 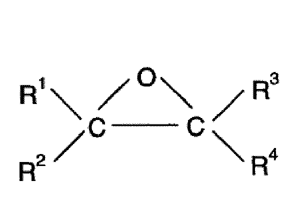 dans laquelle
R¹ à R⁴ sont chacun indépendamment les uns des autres l'hydrogène, un radical alkyle en C₁-C₄, cycloalkyle en C₅ ou C₆ ou phényle,
ou R¹ et R³ et/ou R² et R⁴ sont à chaque fois reliés l'un à l'autre pour former un radical cycloalkyle, R¹ et R³ et/ou R² et R⁴ comprenant de préférence au total 3 ou 4 atomes C et les radicaux éventuellement non reliés l'un à l'autre étant à chaque fois l'hydrogène ou un radical alkyle en C₁-C₄,
ou R¹ et R² et/ou R³ et R⁴ sont à chaque fois reliés l'un à l'autre pour former un radical cycloalkyle, R¹ et R² et/ou R³ et R⁴ comprenant à chaque fois au total 2, 3, 4 ou 5 atomes C.

13. Procédé selon la revendication 12, **caractérisé en ce que** l'oxyde d'alkylène est l'oxyde d'éthylène et/ou l'oxyde de propylène.

14. Procédé selon la revendication 12, **caractérisé en ce que** l'oxyde d'alkylène est l'oxyde d'isobutylène, l'oxyde de cyclohexène ou l'oxyde de styrène.

15. Procédé selon l'une quelconque des revendications 1 à 14, **caractérisé en ce que** le gaz inerte est l'azote, un gaz noble, le méthane ou le CO₂.

16. Utilisation du procédé selon l'une quelconque des revendications 1 à 15 pour éviter en toute fiabilité un refoulement du mélange réactionnel issu d'un réacteur pour la fabrication d'éthanolamines, d'isopropanolamines, d'alkylalcanolamines, d'alkyldialcanoldiamines et/ou de dialkylalcanolamines par mise en réaction d'oxydes d'alkylène avec des amines ou de l'ammoniac.
